# EUROPÄISCHE PATENTSCHRIFT

(11) **EP 0 576 960 B1**
(45) Veröffentlichungstag und Bekanntmachung des Hinweises auf die Patenterteilung: **15.10.1997**
(21) Anmeldenummer: 93109904.8
(22) Anmeldetag: 22.06.1993
(51) Int. Cl.: C08L 51/04, C08L 51/00

(54) **Formmasse mit matter Oberfläche**
Moulding material with a mat surface
Masse à mouler à surface mate

(30) Priorität: 29.06.1992 DE 4221293
(43) Veröffentlichungstag der Anmeldung: 05.01.1994
(73) Patentinhaber: BASF Aktiengesellschaft, 67063 Ludwigshafen (DE)
(72) Erfinder: Niessner, Norbert, Dr., D-6701 Friedelsheim (DE); Seitz, Friedrich, Dr., D-6701 Friedelsheim (DE); Fischer, Wolfgang, Dr., D-6700 Ludwigshafen (DE); Guentherberg, Norbert, Dr., D-6720 Speyer (DE); Ruppmich, Karl, D-6700 Ludwigshafen (DE); Moors, Rainer, Dr., D-6703 Limburgerhof (DE); Weiss, Robert, Dr., D-6700 Ludwigshafen (DE)

(56) Entgegenhaltungen:
- EP-A- 0 450 511
- EP-A- 0 534 211
- DATABASE CHEMICAL ABSTRACTS (HOST: STN): CA110(2): 9370t, Colombus, OH, V.S. & JP-A-63 125 587 (SUMITOMO NAUGATUCK) 28-05-1988
- DATABASE CHEMICAL ABSTRACTS (HOST: STN): CA109(14): 111784x, Colombus OH, V.S.; &JP-A-63 081 184 ( SUMITOMO NAUGATUCK) 12-04-1988

## Beschreibung

Polymere und Polymerlegierungen mit matter Oberfläche sind von wachsendem Interesse für Anwendungsbereiche, bei denen gleichzeitig hohe Zähigkeit und niedrige Lichtreflexionswerde (verminderte Blendung) gefordert werden, wie beispielsweise im Automobilinnenraum oder für optisch anspruchsvolle Gebrauchsgegenstände zur Vermeidung von Fingerabdrücken.

Eine Methode, matte Formkörper zu erhalten, ist die Verwendung grobteiliger Kautschuke (vgl. beispielsweise US 4 169 869) oder nur schwach vernetzte Kautschuke (vgl. beispielsweise DE-OS 2 057 936) als Pfropfgrundlage, welche anschließend in bekannter Weise gepfropft werden und den zu mattierenden Thermoplasten zugemischt werden.

Die Methode hat jedoch den Nachteil, daß gleichzeitig Zähigkeit, Härte und Verarbeitbarkeit verschlechtert werden.

Eine andere Methode der Mattierung ist das Abmischen der zu mattierenden Thermoplasten mit neutralen oder sauren Pfropfcopolymerisaten, die zwar den gewünschten Effekt bewirkt, jedoch zu einer deutlichen Verfärbung der Formmasse führt, so daß dieser Weg für den Kunststoffverarbeiter nicht gangbar ist.

An sich ist auch bekannt, gleichzeitig sowohl saure als auch basische Monomere in einer matten Formmasse zu verwenden: DE 34 05 938 beschreibt Polymermischungen mit matter Oberfläche auf der Basis von Pfropfcopolymerisaten mit sauren Funktionen und Thermoplastharzen mit basischen Funktionen. DE 34 21 353 beschreibt die Verwendung saurer als auch gleichzeitig basischer Monomerer in der Pfropfhülle einer Kautschukkomponente, und die Verwendung dieser Pfropfkautschuke als Mattierungsmittel.

Pfropfkautschuke, welche saure Monomere im Grundkautschuk und basische Monomere in der Pfropfhülle enthalten und ihre Herstellung sind in EP 450 511 beschrieben. Dort wird erwähnt, daß solche Pfropfkautschuke in Abmischung mit spröden, d.h. nicht schlagzähmodifizierten Polymeren wie Polyvinylchlorid, Polymethylmethacrylat und Styrol/Acrylnitril-Copolymeren matte Oberflächen ergeben. Technisch interessant ist aber vielmehr, bereits schlagzäh-modifizierte Thermoplaste durch Zusatz geringer Mengen eines "Mattierungsmittels" deutlich zu mattieren, wobei die Zähigkeit gleich bleibt oder sogar verbessert wird. Die Verwendung von Pfropfkautschuken als Mattierungsmittel, welche saure Monomere im Grundkautschuk und basische Monomere in der Pfropfhülle oder basische Monomere im Grundkautschuk und saure Monomere in der Pfropfhülle enthalten, und welche einfach zu vorhandenen schlagzäh modifizierten Thermoplasten wie beispielsweise ABS, ASA, schlagzähem Polystyrol (HIPS), Polycarbonat/ ABS, Polycarbonat/ASA, Polyphenylenether/HIPS, schlagzähem Polymethylmethacrylat, schlagzähem PVC zugesetzt werden können, ist die erfindungsgemäße Lösung des seit langem bestehenden Problems.

Das Mattierungsmittel ist erfindungsgemäß ein Pfropfcopolymer (nachstehend mit B bezeichnet) aus
- B1:: 30 bis 80 Gew.-% einer kautschukelastischen Pfropfgrundlage aus
B11: 75 bis 99,8 Gew.-% eines Alkylacrylats mit 1 bis 8 C-Atomen im Alkylrest
B12: 0,1 bis 5 Gew.-% eines polyfunktionellen, vernetzend wirkenden Monomeren
B13: 0,1 bis 20 Gew.-% eines eine oder mehrere saure Gruppen enthaltenden Monomeren oder
B111: 49,9 bis 99,9 Gew.-% eines oder mehrerer Diene
B112: bis zu 50 Gew.-% eines weiteren ethylenisch ungesättigten Monomeren
B113: 0,1 bis 20 Gew.-% eines eine oder mehrere saure Gruppen enthaltenden Monomeren und
- B2:: 20 bis 70 Gew.-% einer Pfropfhülle aus
B21: 40 bis 99,9 Gew.-% eines vinylaromatischen Monomeren
B22: bis 49,9 Gew.-% eines polaren, copolymerisierbaren, ethylenisch ungesättigten Monomeren
B23: 0,1 bis 20 Gew.-% eines eine oder mehrere basische Gruppen enthaltenden Monomeren.
oder Pfropfpolymer entsprechend Anspruch 2.

Als zu mattierender Thermoplast A dienen vor allem schlagzäh modifizierte Thermoplaste, bestehend aus den Komponenten A1 + A2, von denen nachstehend nur einige bevorzugte aufgeführt werden, sowie (gegebenenfalls auch schlagzäh modifizierte) Thermoplaste aus der Reihe der Polycarbonate, Polyester, Polyestercarbonate, Polyamide, Polyetherketone, Polyethersulfone, Polysulfone, Polyoxyalkylene, Polyarylensulfide, Polyphenylenether oder Mischungen davon. Die matte Formmasse kann das erfindungsgemäße Mattierungsmittel z.B. in einer Menge von 0,1 bis 60, bevorzugt von 0,5 bis 40 und besonders bevorzugt von 2 bis 20 Gew.-% (bezogen auf die Summe aller Komponenten) enthalten.

Bevorzugt sind insbesondere die sogenannten ABS- und ASA-Polymerisate. Diese bestehen im allgemeinen aus mindestens einem Pfropfcopolymerisat (Komponente A1) und mindestens einem Thermoplasten (Komponente A2), welcher im allgemeinen die Pfropfcopolymerisate dispergiert enthält. Weiterhin bevorzugt sind die Thermoplasten A3, die sowohl als alleinige Komponente A - d.h. nicht schlagzähmodifiziert - eingesetzt werden können, als auch in Mischung mit Komponente Al und/ oder A2.

Pfropfcopolymerisate A1 werden hergestellt durch Pfropfung von mindestens einem der im folgenden aufgeführten Monomeren A12 auf mindestens einem der im folgenden aufgeführten Pfropfgrundlagen A11.

Es kann aber auch in Einzelfällen sein, daß die Komponente A1 keine Pfropfhülle besitzt, also einstufig ist, und dennoch (teil)verträglich mit der thermoplastischen Komponente A2 ist. In diesem Fall ist Komponente A1 mit der Beschreibung der Kautschuke A11 identisch.

Als Kautschuk A11 können beispielsweise Naturkautschuk, Epichlorhydrin-Kautschuke, Ethylen-Vinylacetat-Kautschuke, Polyethylenchlorsulfonkautschuke, Silikonkautschuke, Polyetherkautschuke, Dienkautschuke, hydrierte Dienkautschuke, Polyalkenamer-Kautschuke, Acrylatkautschuke, Ethylen-Propylen-Kautschuke, Ethylen-Propylen-Dien-Kautschuke, Butylkautschuke und Fluorkautschuke eingesetzt werden. Bevorzugt werden Acrylatkautschuke, Butadienkautschuke, Ethylen-Propylen-Dien-Kautschuke, hydrierte Butadien- und Isoprenkautschuke oder Silikonkautschuke.

Acrylatkautschuke sind beispielsweise Alkylacrylat-Kautschuke auf der Basis von einem oder mehreren C₁-C₈-Alkylacrylaten, so insbesondere von Butyl-, Hexyl-, Octyl- und 2-Ethylhexylacrylat. Diese Alkylacrylatkautschuke können bis zu 30 Gew.-% Monomere wie Vinylacetat, (Meth)acrylnitril, Styrol, substituiertes Styrol, Methylmethacrylat, Vinylether copolymerisiert enthalten. Diese Acrylatkautschuke können weiterhin bis zu 10 Gew.-%, vorzugsweise 1 bis 5 Gew.-% bezogen auf die bei der Herstellung der Kautschukgrundlage eingesetzten Monomeren an vernetzend wirkenden, polyfunktionellen Monomeren copolymerisiert enthalten. Beispiele sind Monomere, die zwei oder mehr zur Copolymerisation befähigte Doppelbindungen enthalten, die nicht in 1,3-Stellung konjugiert sind. Geeignete Vernetzungsmonomere sind beispielsweise Divinylbenzol, Diallylmaleat, Diallylfumarat, Diallylphthalat, Triallylcyanurat, Triallylisocyanurat, Triallylphosphat, Allylmethacrylat. Als besonders günstiges Vernetzungs-Monomer hat sich der Acrylsäureester des Tricyclodecenylalkohols erwiesen (vgl. DE-PS 12 60 135).

Geeignete Acrylatkautschuke sind auch Produkte, die einen vernetzten Dienkautschuk aus einem oder mehreren konjugierten Dienen, wie Polybutadien oder ein Copolymerisat eines Konjugierten Diens mit einem ethylenisch ungesättigten Monomer, wie Styrol und/oder Acrylnitril, als Kern und einer oder mehrerer weiterer Pfropfhüllen enthalten, wobei mindestens eine davon ein Acrylatkautschuk ist.

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z.B. Acrylnitril, Methacrylnitril, Acrylsäure, Methacrylsäure, Acrylsäurebutylester, Acrylsäureethylhexylester und Methylmethacrylat).

Besonders bevorzugte Dien-Kautschuke sind Butadien-, Butadien-Styrol-, Butadien-Methylmethacrylat-, Butadien-Acrylsäurebutylester- und Butadien-Acrylnitril-Kautschuke.

Geeignete Silikonkautschuke können z.B. vernetzte Silikonkautschuke aus Einheiten der allgemeinen Formeln R₂SiO, RSiO_{3/2}, R₃SiO_{1/2} und SiO_{2/4} sein, wobei R einen einwertigen Rest darstellt. Die Menge der einzelnen Siloxaneinheiten sind dabei so bemessen, daß auf 100 Einheiten der Formel R₂SiO 0 bis 10 Mol-Einheiten der Formel RSiO_{3/2}, 0 bis 1,5 Mol-Einheiten R₃SiO_{1/2} und 0 bis 3 Mol-Einheiten SiO_{2/4} vorhanden sind. R kann dabei entweder ein einwertiger gesättigter Kohlenwasserstoffrest mit 1 bis 18 C-Atomen, der Phenylrest oder der Alkoxy-Rest oder eine radikalisch angreifbare Gruppe wie der Vinyl- oder der Mercaptopropylrest sein. Bevorzugt ist, daß mindestens 80 % aller Reste R Methyl sind; insbesondere bevorzugt sind Kombinationen aus Methyl und Ethyl oder Methyl.

Bevorzugte Silikonkautschuke enthalten eingebaute Einheiten radikalisch angreifbarer Gruppen, insbesondere Vinyl-, Allyl-, Halogen-, Mercaptogruppen, vorzugsweise in Mengen von 2 bis 10 Mol-%, bezogen auf alle Reste R.

Sie können beispielsweise nach den Angaben der EP-A-260 558 hergestellt werden.

Geeignete Monomere zur Bildung der Pfropfhülle A12 sind ausgewählt aus mindestens einer der nachstehenden Gruppen A121 und A122.

### A121:

Styrol und seine substituierten Derivate, wie z.B. α-Methylstyrol, α-Chlorstyrol, p-Chlorstyrol, 2,4-Dichlorstyrol, p-Methylstyrol, 3,4-Dimethylstyrol, p-tert.-Butylstyrol, o- und p-Divinylbenzol, p-Methyl-α-Methylstyrol und p-Chlor-α-Methylstyrol, Methylmethacrylat; bevorzugt sind Styrol, α-Methylstyrol und Methylmethacrylat.

### A122:

Acryl- und Methacrylverbindungen, wie z.B. Acrylnitril, Methacrylnitril, Acryl- und Methacrylsäure, Methylacrylat, Ethylacrylat, n- und Isopropylacrylat, n- und iso-Butylacrylat, tert.-Butylacrylat, 2-Ethylhexylacrylat, Methylmethacrylat, Ethylmethacrylat, n- und Isopropylmethacrylat, n- und Isobutylmethacrylat, tert.-Butylmethacrylat, Cyclohexylmethacrylat, Isobornylmethacrylat, Maleinsäureanhydrid und dessen Derivate, wie Maleinsäureester, Maleinsäurediester und Maleinimid, z.B. Alkyl- und Acrylmaleinimide, wie beispielsweise Methyl- oder Phenylmaleinimid, bevorzugt Acrylnitril, Methylmethacrylat, Maleinsäureanhydrid und Phenylmaleinimid.

Bevorzugte Herstellverfahren für A1 sind die Emulsions-, Lösungs-, Masse- oder Suspensionspolymerisation. Besonders bevorzugt können die Polymerisate A1 durch radikalische Emulsionspolymerisation hergestellt werden. Insbesondere können die Pfropfcopolymerisate A1 durch radikalische Emulsionspfropfpolymerisation der Monomeren A12 in Gegenwart von Kautschuklatices der Komponente A11 bei Temperaturen von 20 bis 90°C unter Verwendung wasserlöslicher oder teilweise öllöslicher Initiatoren wie Peroxodisulfat, oder mit Hilfe von Redoxinitiatoren erzeugt werden. Im Falle von Redoxinitiatoren kann die Polymerisationstemperatur auch unterhalb von 20°C liegen.

Es können aber auch solche Kautschuke Verwendung finden, die bereits aus vorgebildeten Kern/Mantel-Kautschukteilchen bestehen. So kann beispielsweise der Kern aus einem Polybutadienkautschuk oder einem Siliconkautschuk, aber auch aus einem Styrol- oder Methylmethacrylat-Homo- oder -Copolymeren, wie z.B. Styrol/Acrylnitril bestehen. Der Mantel kann dann beispielsweise aus einem Acrylat bestehen (EP-A-260 558). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (z.B. nach EP-A-230 282, DE-OS 36 01 419, EP-A-269 861).

Die Komponente A besteht zu 0,1 bis 60 Gew.-%, bevorzugt zu 0,5 bis 40 Gew.-% und insbesondere 2 bis 20 Gew.-% aus dem Pfropfcopolymeren (Elastomeren) A1 und zu 40 bis 99,9 Gew.-%, bevorzugt 60 bis 99,5 und insbesondere zu 80 bis 98 Gew.-% aus der Hartmatrix A2.

Die Elastomeren A1 enthalten im allgemeinen 10 bis 100 Gew.-%, bevorzugt 20 bis 90 und besonders bevorzugt 30 bis 75 Gew.-% Grundkautschuk A11 und bis 90 Gew.-%, bevorzugt 10 bis 80, besonders bevorzugt 25 bis 70 Gew.-% pfropfcopolymerisierte Monomere A12.

Die Monomeren A121 werden in einer Menge von 50 bis 100 Gew.-%, vorzugsweise 60 bis 95 Gew.-% und die Monomeren A122 in einer Menge bis zu 50 Gew.-%, vorzugsweise von 5 bis 40 Gew.-% verwendet.

Die Kautschuke liegen in diesen Polymerisaten A11 im allgemeinen in Form vernetzter oder teilweise vernetzter Teilchen vor. Die mittlere Teilchengröße d(50) der Polymerisate A1 liegt zwischen 0,05 und 10 µm, vorzugsweise zwischen 0,08 und 1 µm.

Als erfindungsgemäße Komponente A2 können Vinylpolymere und (Meth)acrylpolymere, als Homo- und Copolymerisate aus den unter A121 und A122 genannten Monomeren hergestellt werden. Beispiele für geeignete Homo- bzw. Copolymerisate sind Polystyrol, Polymethylmethacrylat, Styrol-Acrylnitril-Copolymere, α-Methylstyrol-Acrylnitril-Copolymere, Styrol-Maleinsaureanhydrid-Copolymere, Styrol-Phenylmaleinimid-Copoymere, Styrol-Methylmethacrylat-Copolymere, Butylmethacrylat-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-tert.-Butylmethacrylat-Copolymere, Styrol-Acrylnitril-tert.-Butylmethacrylat-Copolymere.

Solche Copolymerisate entstehen häufig bei der Pfropfpolymerisation zur Herstellung des Pfropfcopolymeren A1, besonders dann, wenn große Mengen Monomere A12 auf kleine Mengen Kautschuk A11 gepfropft werden. Die Vinylpolymere und (Meth)-Acrylpolymere können mittels bekannter radikalischer, anionischer und kationischer Polymerisationsverfahren hergestellt werden. Auch die bekannte Redoxpolymerisation oder die bekannte Polymerisation mit metallorganischen Mischkatalysatoren kann vorteilhaft sein.

Als erfindungsgemäß zu mattierende Thermoplaste können auch die im folgenden unter A3 beschriebenen amorphen und teilkristallinen Komponenten allein oder in Mischung mit den Komponenten A1 und/oder A2 eingesetzt werden. In einer bevorzugten Ausführungsform können Mischungen, aus einer oder mehrerer der nachstehenden Thermoplaste A3 mit einer oder mehrerer unter A1 und A2 aufgeführten Komponenten als erfindungsgemäße Thermoplaste A eingesetzt werden.

In einer besonders bevorzugten Ausführungsform werden Mischungen aus 5 bis 95 Gew.-% Komponente (A1 + A2) und 5 bis 95 Gew.-% Komponente A3 als zu mattierende Polymere eingesetzt.

Erfindungsgemäße Blendkomponenten A sind beispielsweise Abmischungen aus Polycarbonat (A3) mit den vorstehend beschriebenen Pfropfcopolymeren A1 und Thermoplasten A2. Solche Mischungen sind schon im Handel, beispielsweise unter der Handelsbezeichnung Bayblend® oder Terblend S® bekannt. Es handelt sich dabei um Abmischungen PC/ABS und PC/ASA. Bevorzugt liegt hierbei der Polycarbonat-Anteil zwischen 5 und 95 Gew.-% und der Anteil der Komponenten (A1 + A2) zwischen 5 und 95 Gew.-%.

Geeignete Polycarbonate A3 sind beispielsweise solche auf Basis von Diphenolen der allgemeinen Formel (I)

HO-Ar-A-Ar-OH (I)

worin
- Ar =: Arylrest (Phenyl, Phenylalkyl, halogensubstituiertes Aryl,
- A =: Einfachbindung, C₁-C₃-Alkylen, C₂-C₃-Alkyliden-, C₃-C₆-Cycloalkylidengruppen sowie -S- oder -SO₂- bedeuten.

Bevorzugte Diphenole der allgemeinen Formel (I) sind beispielsweise Hydrochinon, Resorcin, 4,4'-Dihydroxybiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Die Diphenole der allgemeinen Formel (I) sind an sich bekannt oder nach bekannten Verfahren herstellbar.

Die Diphenole der allgemeinen Formel (I) können sowohl einzeln als auch im Gemisch zur Herstellung der Polycarbonate verwendet werden.

Die geeigneten Polycarbonate können in bekannter Weise verzweigt sein, und zwar vorzugsweise durch den Einbau von 0,05 bis 2,0 Mol-%, bezogen auf die Summe der eingesetzten Diphenole, an mindestens trifunktionellen Verbindungen, beispielsweise solchen mit drei oder mehr phenolischen OH-Gruppen.

Als besonders geeignet haben sich Polycarbonate erwiesen, die relative Viskositäten nᵣₑₗ von 1,10 bis 1,50, insbesondere von 1,25 bis 1,40 aufweisen. Dies entspricht mittleren Molekulargewichten M_{w} (Gewichtsmittel) von 10.000 bis 200.000, vorzugsweise von 20.000 bis 80.000.

Die Herstellung der Polycarbonate kann beispielsweise durch Umsetzung der Diphenole der allgemeinen Formel (I) mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol, aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.- Butylphenol, p-tert.-Octylphenol, p-Dodecylphenol, 2-(3,5-dimethylheptyl)-phenol und 4-(3,5-Dimethylheptyl)-phenol.

Als Thermoplaste A3 können auch Polycarbonat-Polysiloxan-Blockcopolymere, Polycarbonat-Polyester-Blockcopolymere und Polycarbonat-Polyester-Blockcopolymere dienen.

Erfindungsgemäß sind weiter als Thermoplaste A3 aromatische Polyester und Polyestercarbonate einsetzbar. Sie bestehen aus mindestens einem aromatischen Bisphenol der allgemeinen Formel (I) aus mindestens einer aromatischen Dicarbonsäure und gegebenenfalls aus Kohlensäure bzw. deren Derivate, wie Phosgen, Dialkyl- und Diarylcarbonat. Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5-dicarbonsäure.

Von den aromatischen Dicarbonsäuren werden besonders bevorzugt die Terephthalsäure und/oder Isophthalsäure eingesetzt. Für die Bisphenole gelten die unter der Formel (I) genannten Bevorzugungen.

Aromatische Polyester und Polyestercarbonate können nach Verfahren hergestellt werden, wie sie für die Polyester- und Polyestercarbonatherstellung aus der Literatur bekannt sind, so z.B. Verfahren in homogener Lösung, nach Schmelzumesterungsverfahren und nach dem Zweiphasengrenzflächenverfahren. Bevorzugt werden Schmelzumesterungsverfahren (Acetatverfahren und Phenylesterverfahren, beispielsweise beschrieben in US-A-3 494 885; 4 386 186; EP-A-26 120, 26 121, 26 684, 28 030, 39 854, 79 075, 91 602, 97 970, 146 887, 156 103, 234 913, 234 919, 240 301) und insbesondere das Zweiphasengrenzflächenverfahren (beispielsweise beschrieben in EP-A 68 014, 88 322, 134 898, 151 750, 182 189, 219 708, 272 426) angewandt.

Aliphatisch-aromatische Polyester sind beispielsweise amorphe Polyester aus Cyclohexan-1,4-dimethanol und Terephthalsäure und/oder Isophthalsäure, die als Comonomere noch andere Dicarbonsäuren und aliphatische Dihydroxyverbindungen einkondensiert enthalten können, z.B. Glykol, Propylenglykol und Butylenglykol. Beispiele für solche Polyester sind Cyclohexan-1,4-dimethanol-Terephthalsäure-Polyester, Cyclohexan-1,4-dimethanol-Terephthalsäure-Isophthalsäure-Copolyester und Cyclohexan-1,4-dimethanol-Terephthalsäure-Ethylenglykol-Copolyester. Solche Polyester werden beispielsweise beschrieben in EP-A 273 151, 273 152, 155 989, 226 974, 185 309, 152 825, 226 189, 272 416 und US-PS 4 188 314 und 4 634 737.

Als Thermoplaste A3 können weiterhin teilkristalline aromatisch-aliphatische Polyester eingesetzt werden. Beispiele sind Polyalkylenterephthalate, z.B. auf Basis von Ethylenglykol, Propandiol-1,3, Butandiol-1,4, Hexandiol-1,6 und 1,4-Bishydroxymethyl-cyclohexan. Besonders bevorzugt werden Polyethylenterephthalate, Polybutylenterephthalate und Copolymere aus Cyclohexan-1,4-dimethanol und Ethylenglykol sowie Terephthalsäure eingesetzt. Insbesondere wird Polybutylenterephthalat eingesetzt.

Die Molekulargewichte M_{w} (Gewichtsmittel) dieser Polyalkylenerephthalate liegen im allgemeinen zwischen 10.000 und 500.000, bevorzugt zwischen 10.000 und 80.000. Die Herstellung, z.B. Umesterung ist beschrieben beispielsweise in den US-A-2 647 885, 2 643 989, 2 534 028, 2 578 660, 2 742 494 und 2 901 466.

Weiterhin kommen als erfindungsgemäße Thermoplaste A3 amorphe Polyamide in Frage. Sie werden beispielsweise erhalten durch Polykondensation in Diaminen, wie Ethylendiamin, 2,2,4- und 2,4,4-Trimethylhexamethylendiamin, m- und p-Xylylendiamin, Bis-(4-aminocyclohexyl)-methan, Gemischen aus 4,4'- und 2,2'-Diaminodicyclohexylmethanen, 2,2-Bis-(4-aminocyclohexyl)-propan, 3,3'-Dimethyl-4,4'-diamino-dicyclohexyl)-propan, 3,3'-Dimethyl-4,4'-diaminodicyclohexylmethan, 3-Aminoethyl-3,5,5-trimethyl-cyclohexylamin, 2,5-Bis-(aminomethyl)-norbornan, 2,6-Bis-(aminomethyl)-norbornan und 1,4-Diamino-methylcyclohexan, und von beliebigen Gemischen dieser Diamine mit Dicarbonsäuren, wie beispielsweise mit Oxalsäure, Malonsäure, Bernsteinsäure, Adipinsäure, Azelainsäure, Decandicarbonsäure, Dodecandicarbonsäure, Heptadecandicarbonsäure, 2,2,4-Trimethyladipinsäure, 2,4,4-Trimethyladipinsäure, Isophthalsäure und Terephthalsäure, und mit beliebigen Gemischen dieser Dicarbonsäuren. Es sind somit auch amorphe Copolyamide einbezogen, die durch Polykondensation mehrere der vorstehend genannten Diamine und/oder Dicarbonsäuren erhalten werden. Ferner sind amorphe Copolyamide einbezogen, die unter Mitverwendung von ω-Aminolaurinsäure und von deren Lactamen hergestellt sind.

Besonders geeignete, amorphe, thermoplastische Polyamide sind solche, die aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornan erhältlich sind, solche die aus Isophthalsäure, 4,4'-Diamino-di-cyclohexylmethan und ω-Caprolactam erhältlich sind, solche, die aus Isophthalsäure, 3,3'-Dimethyl-4,4'-diamino-dicyclohexylmethan und ω-Laurinlactam erhältlich sind, und solche, die aus Terephthalsäure und 2,2,4- und/oder 2,4,4-Trimethylhexamethylendiamin erhältlich sind.

Anstelle des reinen 4,4'-Diaminodicyclohexylmethans können auch Gemische der stellungsisomeren Diaminodicyclohexylmethane eingesetzt werden.

Die amorphen Polyamide und ihre Herstellung sind bekannt (siehe beispielsweise Ullmann, Encyclopädie der technischen Chemie, Band 19, S. 50).

Geeignete Thermoplaste A3 sind beispielsweise auch teilkristalline Polyamide, z.B. Polyamid-6, Polyamid-6,6, Polyamid-4,6, Polyamid-6,12 und teilkristalline Copolyamide auf Basis dieser Komponenten. Weiterhin geeignet sind teilkristalline Polyamide, deren Säurekomponente ganz oder teilweise (z.B. neben ε-Caprolactam) aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht und deren Zusammensetzungen im Prinzip aus dem Stand der Technik bekannt sind (siehe beispielsweise Encyclopedia of Polymers, Vol. 11, S. 315 ff).

Außerdem sind teilkristalline Polyamide geeignet, die ganz oder teilweise aus Lactamen mit 6 bis 12 C-Atomen, ggf. unter Mitverwendung einer oder mehrerer oben genannter Diamine, hergestellt werden.

Besonders bevorzugte teilkristalline Polyamide sind Polyamid-6 und Polyamid-6,6 oder Copolyamide mit geringem Anteil, z.B. bis etwa 10 Gew.-%, an anderen Cokomponenten.

Weitere geeignete Thermoplaste A3 sind aromatische Polyetherketone (beschrieben beispielsweise in den Patentschriften GB 1 078 234, US 4 010 147, EP 135 938, 292 211, 275 035, 280 998, 165 406 und in der Publikation von C.K. Sham et. al. Polymer 29/6, 1016-1020 (1988) beschrieben sind. Diese Polyetherketone können beispielsweise erhalten werden, indem man Bisphenole mit Bis-(halogenaryl)-ketonen in polaren aprotischen Lösungsmitteln in Gegenwart von Alkalicarbonaten, z.B. Lithiumcarbonat, umsetzt. Als Beispiel sei die Umsetzung von Hydrochinon mit 4,4'-Difluorbenzophenon genannt.

Ebenfalls geeignet als Thermoplaste A3 sind Polyethersulfone und die Polysulfone.

Geeignet als A3 sind ferner Polyoxyalkylene, wie z.B. das Polyoxymethylen. Ihre Herstellung ist dem Fachmann bekannt. Ganz allgemein weisen diese Polymerisate mindestens 50 Mol-% an wiederkehrenden Einheiten -CH₂O- in der Polymerhauptkette auf.

Die Homopolymeren werden im allgemeinen durch Polymerisation von Formaldehyd oder Trioxan in Gegenwart von geeigneten Katalysatoren hergestellt.

Im Rahmen der Erfindung werden Polyoxymethylen- (d.h. Trioxancopolymere bevorzugt, insbesondere solche, die neben den wiederkehrenden Einheiten -CH₂O- noch bis zu 50, vorzugsweise 0,1 bis 20 und insbesondere 0,3 bis 10 Mol-% an wiederkehrenden Einheiten

-O-C(R¹)(R²)-C(R⁴)(R⁵)ₙ)-

enthalten, wobei R¹ bis R⁴ unabhängig voneinander ein Wasserstoffatom, eine C₁-C₄-Alkylgruppe mit 1 bis 4 C-Atomen und R⁵ eine -CH₂-, -CH₂O-, eine C₁-C₄-Alkyl- oder C₁- bis C₄-Haloalkyl substituiertes Methylengruppe oder eine entsprechende Oxymethylengruppe darstellen und n einen Wert im Bereich von 0 bis 3 hat.

Die entsprechenden Comonomeren sind beispielsweise Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale wie Polydioxolan oder Polydioxepan.

Ebenfalls geeignet sind Oxymethylenterpolymerisate, die beispielsweise durch Umsetzung von Trioxan, einem der vorstehend beschriebenen cyclischen Ether und einem dritten Monomeren, vorzugsweise einer bifunktionellen Verbindung der Formel 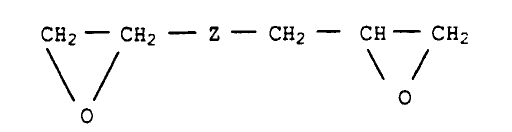 wobei Z eine chemische Bindung, -O-, -ORO- (R = C₁-C₈-Alkylen oder C₂-C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 Mol Glycidylverbindung und 1 Mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Die bevorzugten Polyoxymethylencopolymeren haben Schmelzpunkte von mindestens 150°C und Molekulargewichte (Gewichtsmittel) M_{w} im Bereich von 5000 bis 150.000, vorzugsweise von 7000 bis 100.000. Endgruppenstabilisierte Polyoxymethylenpolymerisate, die an den Kettenenden C-C-Bindungen aufweisen, werden besonders bevorzugt.

Schließlich sind als Thermoplaste A3 die Polyarylensulfide, insbesondere das Polyphenylensulfid. Die Herstellung ist bekannt und beispielsweise beschrieben in US-PS 3 354 129, 3 786 035, 3 853 824, 3 856 560, 3 862 095 und EP-A-171 021.

Nachstehend beschrieben ist nun das erfindungsgemäße Umsetzungsprodukt. Es handelt sich um ein Pfropfcopolymerisat, welches aufgebaut ist aus einer Pfropfgrundlage bestehend aus
- B1:: 30 bis 80 Gew.-% einer kautschukelastischen Pfropfgrundlage aus
B11: 75 bis 99,8 Gew.-% eines Alkylacrylats mit 1 bis 8 C-Atomen im Alkylrest
B12: 0,1 bis 5 Gew.-% eines polyfunktionellen, vernetzend wirkenden Monomeren
B13: 0,1 bis 20 Gew.-% eines eine oder mehrere saure Gruppen enthaltenden Monomeren oder
B111: 49,9 bis 99,9 Gew.-% eines oder mehrerer Diene
B112: bis zu 50 Gew.-% eines weiteren ethylenisch ungesättigten Monomeren
B113: 0,1 bis 20 Gew.-% eines eine oder mehrere saure Gruppen enthaltenden Monomeren und
- B2:: 20 bis 70 Gew.-% einer Pfropfhülle aus
B21: 40 bis 99,9 Gew.-% eines vinylaromatischen Monomeren
B22: bis 49,9 Gew.-% eines polaren, copolymerisierbaren, ethylenisch ungesättigten Monomeren
B23: 0,1 bis 20 Gew.-% eines eine oder mehrere basische Gruppen enthaltenden Monomeren.

Bevorzugt haben die erfindungsgemäßen Pfropfcopolymeren B die Zusammensetzung 55 bis 75 Gew.-% B1 und 25 bis 45 Gew.-% B2; die Anteile der Einzelbestandteile, bezogen jeweils auf B1 bzw. B2 sollte bevorzugt sein:
- B11:: 92 bis 99,6 Gew.-%
- B12:: 0,2 bis 4 Gew.-%
- B13:: 0,2 bis 15 Gew.-%
- B111:: 80 bis 99,8 Gew.-%
- B112:: 0 bis 20 Gew.-%
- B113:: 0,2 bis 15 Gew.-%
- B21:: 55 bis 84,8 Gew.-%
- B22:: 15 bis 40 Gew.-%
- B23:: 0,2 bis 15 Gew.-%.

Monomere B21 bis B23, die nicht im Wege der Pfropfung mit dem Pfropfkern verbunden, sondern lediglich als okkludierte Polymere eingebaut sind, werden der Pfropfhülle zugerechnet. B21 bis B23 gibt somit die bei der Herstellung zugegebenen mengen an.

Über die erfindungsgemäßen teilchenförmigen Pfropfcopolymerisate B, ihre Bestandteile, ihre Herstellung und die Gewinnung entsprechender Formmassen ist im einzelnen das folgende zu sagen:

Die teilchenförmigen Pfropfpolymerisate werden aus einer Pfropfgrundlage (Kautschuk) B1 und einer Pfropfhülle B2 in an sich bekannter Weise erhalten. Als Kautschuk B1 dient entweder ein vernetztes Acrylsäureester-Polymerisat oder ein Diencopolymerisat mit einer Glasübergangstemperatur unter 0°C, bevorzugt unter -20°C, besonders bevorzugt unter -30°C (die Glasübergangstemperatur wird z.B. nach der DSC-Methode ermittelt; K.H. Illers, Makromol. Chemie 127 (1969) S. 1).

Als Monomere B11 kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, vorzugsweise von 0,2 bis 4 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren B12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 12 60 135).

Das zur Herstellung der Pfropfgrundlage verwendete Monomerengemisch enthält noch 0,1 bis 20 Gew.-%, bevorzugt 0,2 bis 15 Gew.-%, eines oder mehrerer Monomerer, die eine oder mehrere saure Gruppen enthalten (B113) bzw. (B13). Als saure Gruppen kommen insbesondere Carbonsäure- oder Sulfonsäuregruppen in Frage. Bevorzugte saure Monomere B113 (B13) sind α,β-ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure oder Zimtsäure.

Als Monomere B111 kommen Butadien, Isopren und deren Derivate in Betracht, sowie gegebenenfalls ein Styrolmonomer B112 und - ebenfalls bedarfsweise - eines der vorgenannten Comonomeren B113 (bzw. B13) mit einer sauren Gruppe.

Die Herstellung des Pfropfmischpolymerisats kann nach der in der DE-PS 12 60 135 beschriebenen Methode erfolgen. Hierzu wird zunächst die Pfropfgrundlage B1 hergestellt; wenn die Pfropfgrundlage ein Acrylatkautschuk sein soll, wird der oder die Acrylsäureester B11, das polyfunktionelle Monomere B12 und das erfindungsgemäße saure Monomere B13 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2 : 1 bis 0,7 : 1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymeriationshifsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres α-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt.

Wenn der Pfropfkern ein Dienkautschuk sein soll, wird zweckmäßig wie folgt verfahren:
Das Elastomer, die Pfropfgrundlage B1 wird hergestellt, indem B111 allein, gegebenenfalls zusammen mit den weiteren Comonomeren in wäßriger Emulsion in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage B1 eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphatdienen; ferner werden in der Regel 0,1 bis 3 Gew.-%, eines Molekulargewichtsreglers - wie Mercaptane, Terpinole oder dimeres a-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisates A einen d₅₀-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

### Pfropfhülle B2

Zur Herstellung des Pfropfmischpolymerisates aus Kern und Pfropfhülle wird in Gegenwart des erhaltenen Latex B1 ein Monomerengemisch aus 50 bis 99,9 Gew.-% mindestens eines vinylaromatischen Monomeren B21, bis 49,9 Gew.-% mindestens eines polaren, copolymerisierbaren Monomeren B22 und 0,1 bis 20 Gew.-% mindestens eines basischen Monomeren B23 polymerisiert. Beispiele für vinylaromatische Monomere sind Styrol, α-Methylstyrol und kernalkylierte Styrole wie p-Methylstyrol und tert.-Butylstyrol. Besonders bevorzugt werden Styrol, α-Methylstyrol und p-Methylstyrol eingesetzt. Beispiele für polare, copolymerisierbare, ethylenisch ungesättigte Monomere B2 sind Acrylnitril, Methacrylnitril, Acrylsäure- und Methacrylsäurealkylester mit 1 bis 4 Kohlenstoffatomen im Alkylrest. Bevorzugt werden Acrylnitril, Methylmethacrylat und Gemische derselben. Geeignete basische Monomere B23 sind mit B21 und B22 copolymerisierbare Monomere, die mindestens eine basische Gruppe im Molekül enthalten. Bevorzugte Monomere B23 enthalten im Molekül eine tertiäre Aminogruppe. Hier seien als Beispiele genannt: Dimethylaminoethyl(meth)acrylat, Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Methacrylsäure mit aliphatischen Alkoholen, die im Alkylrest eine tertiäre Aminogruppe enthalten. Als Beispiel seien Dimethylaminoethylacrylat und -methacrylat genannt. Bevorzugte Monomerengemische enthalten 55 bis 84,8 (70 bis 79,5) Gew.-% Styrol und/oder alpha-Methylstyrol, 15 bis 40 (20 bis 35) Gew.-% Acrylnitril und 0,2 bis 15 (0,5 bis 5) Gew.-% der basischen Verbindung, wobei Dimethylaminoethylacrylat bevorzugt ist.

Es ist vorteilhaft, die Pfropfmischpolymerisation auf das als Pfropfgrundlage B1 dienende Polymerisat wiederum in wäßriger Emulsion durchzuführen. Sie kann im gleichen System wie die Polymerisation der Pfropfgrundlage vorgenommen werden, wobei weiterer Emulgator und Initiator zugegeben werden kann. Diese müssen mit den zur Herstellung der Pfropfgrundlage B1 verwendeten Emulgatoren bzw. Initiatoren nicht identisch sein. So kann es z.B. zweckmäßig sein, als Initiator für die Herstellung der Pfropfgrundlage B1 ein Persulfat zu verwenden, zur Polymerisation der Pfropfhülle B2 jedoch ein Redoxinitiatorsystem einzusetzen. Im übrigen gilt für die Wahl von Emulgator, Initiator und Polymerisationshilfsstoffen das bei der Herstellung der Pfropfgrundlage B1 Gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 20 bis 70 Gew.-%, vorzugsweise von 25 bis 60 Gew.-%, resultiert. Unter Pfropfgrad versteht man den Anteil (in %) der Pfropfmonomeren B2 am gesamten Pfropfpolymer B.

In einer weiteren bevorzugten Ausführungsform ist B13 0,1 bis 20 Gew.-%, bevorzugt 0,2 bis 15 Gew.-% mindestens eines eine oder mehrere basische Gruppen enthaltenden Monomeren und die Komponente B23 0,1 bis 20 Gew.-%, bevorzugt 0,2 bis 15 Gew.-% mindestens eines eine oder mehrere saure Gruppen enthaltendes Monomer.

In dieser weiteren, bevorzugten Ausführungsform befinden sich also saure Monomere in der Pfropfhülle und basische Monomere in der Pfropfgrundlage des Pfropfkautschuks B.

Diese saure und basische Gruppen enthaltenden Monomere sind vorstehend schon eingehend beschrieben worden. Alle anderen vorstehenden Beschreibungen betreffend Komponente B und deren Bestandteile gelten selbstverständlich auch für die obige weitere, bevorzugte Ausführungsform.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindinngsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist. Die erfindinngsgemäßen Formmassen weisen gegenüber dem Stand der Technik eine deutlich mattere Oberfläche auf.

Die in der vorliegenden Anmeldung beschriebenen Parameter wurden wie folgt bestimmt:
1. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, beidem 50 Gewichtsprozent der Teilchen einen kleineren und 50 Gewichtsprozent der Teilchen einen größeren Durchmesser als der d₅₀-Wert aufweisen.
2. Die Kerbschlagzähigkeit [in kJ/m²] der Produkte wurde nach DIN 53 453 an gespritzten Normkleinstäben bei 23°C gemessen. Untersucht wurden jeweils eine Probenserie bei einer Spritztemperatur von 250°C. Die gefundenen Ergebnisse für die Beispiele sind in Tabelle 2 zusammengefaßt.
3. Die Viskositätszahlen [in cm³/g] wurden an einer 0,5 %igen Lösung in Methylethylketon bestimmt. Gelanteile wurden vor der Messung durch Zentrifugieren entfernt und die Einwaage entsprechend korrigiert.
4. Für die Glanzmessungen wurden die erfindungsgemäßen Formmassen auf einer Spritzgußmaschine der Fa. Arburg, Typ Allrounder bei einer Massetemperatur von 250°C und einer Formtemperatur von 60°C zu Rundscheiben abgespritzt. Die Glanzmessungen wurden nach DIN 67 530 mit einem Dr. Lange Reflektometer UME 1 unter einem Einstrahlwinkel von 45°C durchgeführt.
5. Die Durchstoßarbeit [in Nm] wurde nach DIN 53 443 an Rundscheiben (⌀ 60 mm, Dicke 2 mm) bestimmt, die bei 250°C gespritzt wurden. Prüftemperatur 23°C.

### Beispiele

Die in den Beispielen genannten Teile und Prozente beziehen sich, soweit nichts anderes angegeben, auf das Gewicht.

### 1. Herstellung der Mattierungsmittel B(1) und B(2), sowie des Vergleichsmittels B(4) auf Acrylatbasis

### 1.1 Herstellung einer Pfropfgrundlage B1

160 g des in Tabelle 1 (siehe B(1), B(2) und Vergleichsversuch B(4)) zur Herstellung der Pfropfgrundlage B1 angegebenen Monomerengemisches wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 60°C gehalten.

### 1.2 Herstellung einer Pfropfhülle B2

### 1.2.1 Beispiel (B(1) und Vergleichsversuch B(4))

2100 g der nach obiger Vorschrift (1.1) hergestellten Emulsion wurden mit 1150 g Wasser und 2,7 g Kaliumperoxodisulfat gemischt und unter Rühren auf 65°C erwärmt. nach Erreichen der Reaktionstemperatur wurden im Lauf von 3 Stunden 560 g des in Tabelle 1 für die Herstellung der Pfropfhülle B2 angegebenen Monomerengemisches zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

### 1.2.2 Beispiel B(2)

Die Reaktion wurde analog 1.2.1 durchgeführt, mit folgenden Unterschieden:

4873 g Emulsion 1.1 wurden mit 1855 g Wasser und 5,1 g Kaliumperoxodisulfat gemischt. Der Zulauf bestand aus 1280 g eines Monomerengemisches aus Tabelle 1.

### 2. Herstellung der Mattierungsmittel B(3) auf Butadienbasis

### 2.1 Herstellung einer Pfropfgrundlage B1

Durch Polymerisation von 594 g Butadien in Gegenwart einer Lösung von 6 g tert.-Dodecylmercaptan, 6 g Methacrylsäure, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %. Die mittlere Teilchengröße beträgt 100 nm.

Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entsteht.

### 2.2 Herstellung der teilchenförmigen Pfropfpolymerisate B2

Nach Zusetzen von 400 g Wasser, 4 g Na-C₁₄-Alkylsulfonat und 2 g Kaliumperoxodisulfat werden 400 g einer Mischung aus Styrol, Acrylnitril sowie der basischen Komponente in den in Tabelle 1 angegebenen Verhältnissen innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Calciumchloridlösung gefällt und das abgetrennte Pfropfmischpolymerisat mit destilliertem Wasser gewaschen und getrocknet.

### 3. Das Vergleichsmittel B(5) wurde nach EP 62901 hergestellt.

### 4. Das Vergleichsmittel B(6) wurde nach der DE 31 49 358, S. 16, Z. 9 bis S. 27, Z. 3 hergestellt.

### 5. Abmischung der Mattierungsmittel mit schlagzäh modifizierten Thermoplasten und Vergleichsversuche

Als Komponenten A werden verwendet:
- SAN =: Ein Copolymerisat aus Styrol und Acrylnitril im Gew.-Verhältnis 65:35 mit einer Viskositätszahl von 80 ml/g (0,5 gew.-% in Dimethylformamid, 23°C), hergestellt durch kontinuierliche Lösungspolymerisation, beschrieben z.B. im Kunststoff-handbuch, Vieweg-Daumiller, Band V (Polystyrol), Carl-Hanser-Verlag, München, 1969, Seite 124, Zeilen 12 ff.
- PPE =: Polyphenylenether-Blend aus 40 Gew.-% Poly-2,6-dimethyl-1,4-phenylenether (Molekulargewichtsbereich M_{w} = 24.000 bis 39.000) und 60 Gew.-% schlagfestem Polystyrol (KR 2710 der BASF Aktiengesellschaft).
- PC =: Ein handelsübliches Polycarbonat auf der Basis von Bisphenol A mit einer relativen Lösungsviskosität ηᵣₑₗ von 1,3 ml/g, gemessen an einer 0,5 gew.-%igen Lösung in Dichlormethan bei 23°C.

®Kraton G 1650; Blockkautschuk der Shell AG ("Kraton") AK 100.000; Siliconöl der Fa. Wacker Chemie

Als Komponenten B werden die vorstehend beschriebenen Komponenten B(1) bis B(6) eingesetzt.

Die Mischungen nach Tabelle 2 wurden jeweils bei 250°C auf einen Doppelschneckenextruder ZSK 30 der Fa. Werner & Pfleiderer zu Granulaten konfektioniert. Die Granulate wurden anschließend zu Prüfkörpern verspritzt, wie angegeben.

Beispielhaft ist im folgenden anhand Tabelle 2, Beispiel 3, sowie Vergleichsversuch V-3 die Abmischung erläutert:

### Beispiel 3

20 Teile eines Polybutadien-Pfropfkautschuks, hergestellt nach der EP 0062901, werden mit 10 Teilen eines erfindungsgemäßen Pfropfkautschuks analog Beispiel 2 und 70 Teilen eines SAN mit 35 AN auf einer ZSK-30 gemischt. Das resultierende Material hat eine Kerbschlagzähigkeit aₖ von 15 kJ/mm² und einen Glanzwert von 15 % Reflektion.

### Vergleichsversuch V-3

30 Teile eines Polybutadien-Pfropfkautschuks, hergestellt nach der Lehre des EP 0062901, werden mit 70 Teilen eines SAN mit 35 AN auf einer ZSK-30 gemischt. Das resultierende Material hat eine Kerbschlagzähigkeit aₖ von 11 kJ/mm² und einen Glanzwert von 62 % Reflektion.

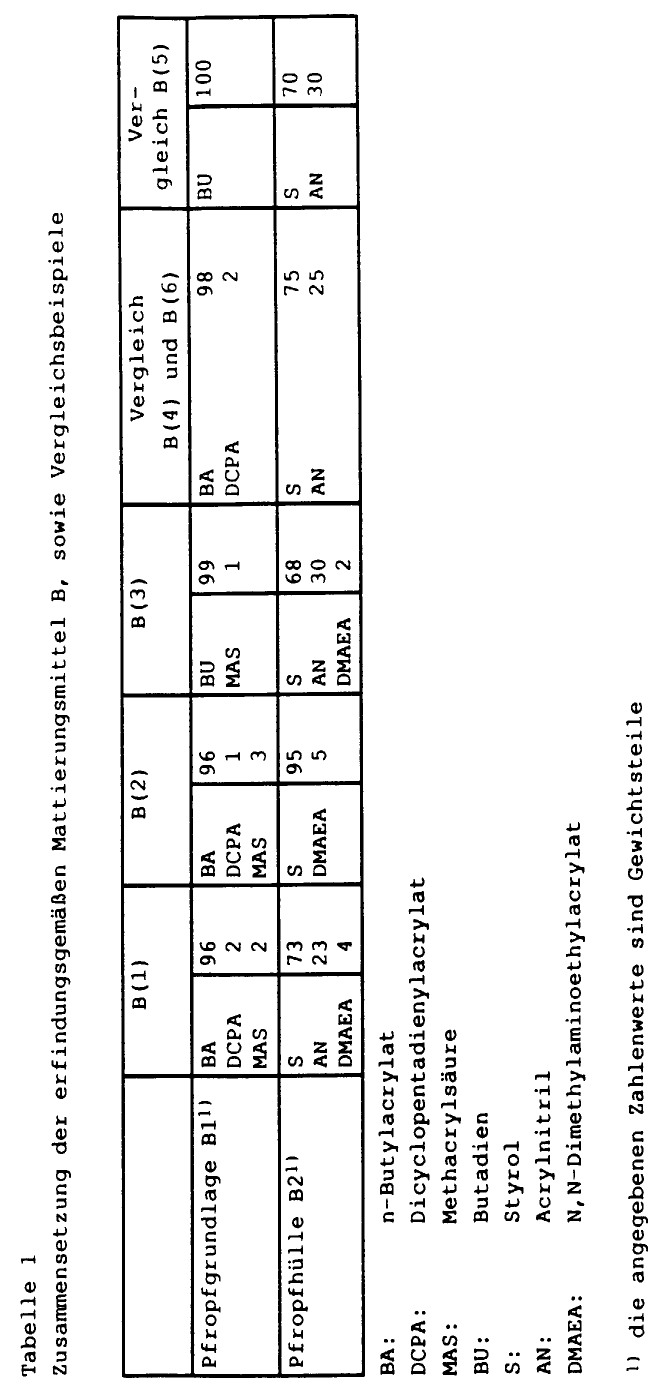

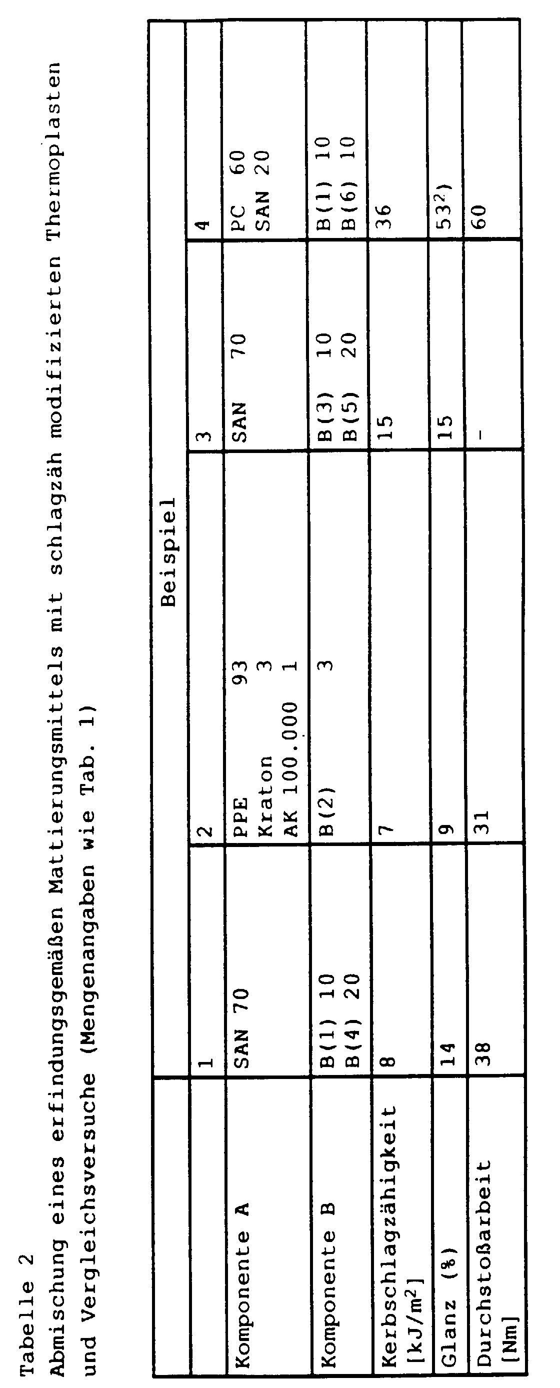

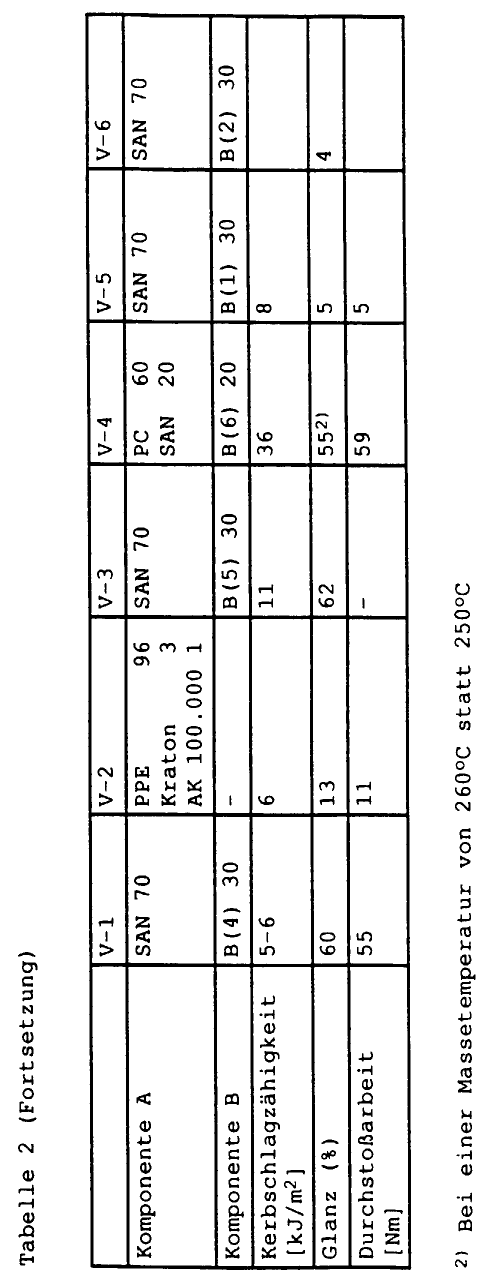

## Patentansprüche

1. Formmasse auf der Grundlage eines schlagzäh modifizierten Thermoplasten A, ausgewählt aus ABS, ASA, schlagzähem Polystyrol (HIPS), schlagzähem Polymethylmethacrylat, schlagzähem PVC, Polycarbonat, Polyestercarbonat, Polyester, Polyamid, Polyphenylenether, Polyetherketon, Polyethersulfon, Polysulfon, Polyoxyalkylen, Polyarylensulfid sowie deren Mischungen enthaltend ein Mattierungsmittel B aus
B1: 30 bis 80 Gew.-% einer kautschukelastischen Pfropfgrundlage aus
B11: 75 bis 99,8 Gew.-% eines Alkylacrylats mit 1 bis 8 C-Atomen im Alkylrest
B12: 0,1 bis 5 Gew.-% eines polyfunktionellen, vernetzend wirkenden Monomeren
B13: 0,1 bis 20 Gew.-% eines eine oder mehrere saure Gruppen enthaltenden Monomeren
oder
B111: 49,9 bis 99,9 Gew.-% eines oder mehrerer Diene
B112: bis zu 50 Gew.-% eines weiteren ethylenisch ungesättigten Monomeren
B113: 0,1 bis 20 Gew.-% eines eine oder mehrere saure Gruppen enthaltenden Monomeren und
B2: 20 bis 70 Gew.-% einer Pfropfhülle aus
B21: 40 bis 99,9 Gew.-% eines vinylaromatischen Monomeren
B22: bis 49,9 Gew.-% eines polaren, copolymerisierbaren, ethylenisch ungesättigten Monomeren
B23: 0,1 bis 20 Gew.-% eines eine oder mehrere basische Gruppen enthaltenden Monomeren.

2. Formmasse nach Anspruch 1, deren Bestandteile B13 bzw. B113 und B23 vertauscht sind.

## Claims

1. A molding composition based on an impact-modified thermoplastic A selected from ABS, ASA, impact resistant polystyrene (HIPS), impact resistant polymethyl methacrylate, impact resistant PVC, polycarbonate, polyester carbonate, polyester, polyamide, polyphenylene ether, polyether ketone, polyether sulfone, polysulfone, polyoxyalkylene, polyarylene sulfide and also mixtures thereof, containing a matting agent B composed of
B1: 30 to 80 % by weight of an elastomeric grafting base of
B11: 75 to 99.8 % by weight of an alkyl acrylate with 1 to 8 carbon atoms in the alkyl radical
B12: 0.1 to 5 % by weight of a polyfunctional, crosslinking monomer
B13: 0.1 to 20 % by weight of a monomer containing one or more acidic groups
or
B111: 49.9 to 99.9 % by weight of one or more dienes
B112: up to 50 % by weight of a further ethylenically unsaturated monomer
B113: 0.1 to 20 % by weight of a monomer containing one or more acidic groups, and
B2: 20 to 70 % by weight of a graft sheath of
B21: 40 to 99.9 % by weight of an aromatic vinyl monomer
B22: up to 49.9 % by weight of a polar, copolymerizable, ethylenically unsaturated monomer
B23: 0.1 to 20 % by weight of a monomer containing one or more basic groups.

2. A molding composition as claimed in claim 1, whose constituents B13 or B113 and B23 are interchanged.

## Revendications

1. Masse à mouler à base d'une matière thermoplastique A modifiée pour une résistance élevée aux chocs, choisie parmi l'ABS, l'ASA, le polystyrène résistant aux chocs (HIPS), le polyméthacrylate de méthyle résistant aux chocs, le PVC résistant aux chocs, le polycarbonate, le polyestercarbonate, le polyester, le polyamide, l'éther de polyphénylène, la polyéthercétone, la polyéthersulfone, la polysulfone, le polyoxyalkylène, le sulfure de polyarylène, de même que leurs mélanges contenant un agent délustrant B constitué de
B1: 30 à 80 % en poids d'une base de greffage caoutchouteuse constituée de
B11: 75 à 99,8 % en poids d'un acrylate d'alkyle avec 1 à 8 atomes de carbone dans le résidu alkyle
B12: 0,1 à 5% en poids d'un monomère polyfonctionnel à action réticulante
B13: 0,1 à 20 % en poids d'un monomère contenant un ou plusieurs groupes acides
ou
B111: 49,9 à 99,9 % en poids d'un ou de plusieurs diènes
B112: jusqu'à 50 % en poids d'un monomère éthyléniquement insaturé supplémentaire
B113: 0,1 à 20 % en poids d'un monomère contenant un ou plusieurs groupes acides et
B2: 20 à 70 % en poids d'une enveloppe de greffage constituée de
B21: 40 à 99,9 % en poids d'un monomère vinylaromatique
B22: jusqu'à 49,9 % en poids d'un monomère polaire, copolymérisable et éthyléniquement insaturé
B23: 0,1 à 20 % en poids d'un monomère contenant un ou plusieurs groupes basiques.

2. Masse à mouler selon la revendication 1, dont les constituants B13, respectivement B113, et B23 ont été permutés.
